(19) Europäisches Patentamt

European Patent Office

Office européen des brevets

(11) **EP 3 059 853 A1**

(12) **EUROPEAN PATENT APPLICATION**

(43) Date of publication:
**24.08.2016 Bulletin 2016/34**

(21) Application number: **15203230.6**

(22) Date of filing: **31.12.2015**

(51) Int Cl.:
***H02P 9/00*** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **20.02.2015 IT TO20150118**

(71) Applicant: **Alenia Aermacchi S.p.A.
00195 Roma (IT)**

(72) Inventor: **ANASTASIO, Vincenzo
00195 ROMA (IT)**

(74) Representative: **Bertolotto, Simone et al
Studio Torta S.p.A.
Via Viotti, 9
10121 Torino (IT)**

(54) **ELECTRIC MASCHINE, METHOD FOR GENERATING AN ELECTRIC QUANTITY WITH REGULATED AMPLITUDE AND FREQUENCY, USE OF THE ELECTRIC MACHINE FOR THE GENERATION OF AN ELECTRIC QUANTITY WITH REGULATED AMPLITUDE AND FREQUENCY**

(57) An electric machine (1) for feeding an electric load (9) by means of an AC electric quantity having a predefined frequency and amplitude, comprising: a doubly-fed asynchronous generator (2, 4) with a wound rotor (2) mechanically coupled to a rotating shaft of the asynchronous generator (2, 4) to generate an intermediate AC electric voltage (U) having a first frequency value and a first amplitude value; a permanent-magnet synchronous generator (12, 6), having a permanent-magnet rotor (12) mechanically coupled to the rotating shaft, to generate an intermediate AC electric voltage having a second frequency value ($f_{Rotor}$) and a second amplitude value; and a control unit (20), designed to a modify the intermediate AC electric voltage to generate a control signal to feed to the wound rotor and, in consequence, modulate the AC supply voltage (U) in such a way that it assumes the predefined frequency and amplitude.

**Description**

The present invention relates to an electric machine, a method for generating an electric quantity with regulated amplitude and frequency, and the use of the electric machine for the generation of an electric quantity with regulated amplitude and frequency.

There are known synchronous and asynchronous electric machines or electric generators, used both as motors and as electric generators. In particular, in a synchronous electric generator, the voltage frequency induced on the stator windings is rigidly linked to the rotor's speed of rotation by the known relation:

$$f_{Stator} = \frac{n_{Rotor} \times N_{Poles}}{120}$$

where $n_{Rotor}$ indicates the rotor's speed of rotation expressed in revolutions per minute (rpm) and $N_{poles}$ indicates the number of poles of the electric machine (defined in the construction phase). As can be deduced from this relation, with the number of pole pairs being fixed, the frequency is a function of the rotor's speed of rotation.

In an asynchronous generator, in particular of the doubly-fed type with wound rotor, if the rotor rotates at a speed at which the natural synchronism produces an output voltage from the stator with a frequency differing from that desired, it is possible to feed the windings of the rotor with a three-phase voltage of opportune frequency so as to create a resulting rotating magnetic field that produces a stator output voltage having the desired frequency. The supply voltage to the rotor windings is a controlled-frequency three-phase voltage, having the function of contributing to the generation of a rotating magnetic field, the rotational speed of which is also a function of the frequency of the rotor's supply voltage. In this case, the previous relation becomes:

$$f_{Stator} = \frac{n_{Rotor} \times N_{Poles}}{120} + f_{Rotor}$$

In other words, the voltage frequency output from the stator is virtually adjustable by choosing to feed the rotor windings with an electric quantity (three-phase voltage) having an opportunely chosen frequency $f_{Rotor}$.

The previous relation refers to the case in which the rotor rotates at a speed lower than that of the desired synchronism. A similar relation can be written in the case where the rotor rotates at a higher speed than the desired synchronism:

$$f_{Stator} = \frac{n_{Rotor} \times N_{Poles}}{120} - f_{Rotor}$$

Clearly, in the case where the rotor rotates exactly at the speed of the desired synchronism, the frequency $f_{Rotor}$ of the voltage to apply to the windings of the rotor is zero, corresponding to a direct current.

In all of the cases presented above, by controlling the intensity value (amplitude) of the voltage supplied to the rotor, it is possible to control the excitation flux and consequently the amplitude value of the supply voltage output by the generator for the electric load to be fed.

Known types of doubly-fed asynchronous generators need an external power source to supply a voltage to the rotor having variable frequency and amplitude, and such as to generate a respective desired voltage on the armature as the electric load conditions of these generators vary. However, this type of solution is not advantageous in systems where electrical energy consumption must be minimized or in systems without alternative sources of electrical energy. Consider, for example, the aeronautics industry.

The object of the present invention is to provide an electric machine, a method for generating an electric quantity of controlled frequency and amplitude, and the use of the electric machine for the generation of an electric quantity of controlled frequency and amplitude, such as to overcome the drawbacks of the known art and, in particular, designed to operate autonomously without the need to be connected to an external electric power supply network beforehand.

According to the present invention, an electric machine, a method for generating an electric quantity of controlled frequency and amplitude, and the use of the electric machine for the generation of an electric quantity of controlled frequency and amplitude are provided, as defined in the appended claims.

For a better understanding of the present invention, some preferred embodiments will now be described, purely by way of non-limitative example and with reference to the sole accompanying figure, which shows, by means of a block diagram, an electric machine for generating an electric quantity of controlled frequency and amplitude.

According to one aspect of the present invention, an electric machine, operating as an asynchronous doubly-fed generator, is provided. The electric machine is equipped with a wound rotor, mechanically coupled to the same transmission unit (or rotating shaft) to which a permanent-magnet rotor is mechanically coupled, which is in turn magnetically coupled to the windings of a respective stator, so as the form a permanent-magnet generator (PMG). The permanent-magnet generator has a number of poles such as to produce a voltage with a frequency higher than the maximum frequency with which the windings of the wound rotor must be fed in order to generate an output voltage (or a power flux, for feeding an electric load) having a desired frequency and amplitude. Therefore, according to the present invention, the rotor windings, typical of an asynchronous electric motor with a wound rotor, instead of being connected to electrical resistances, which when operating as a motor serve to regulate the starting torque of the motor, are connected to a three-phase alternating current (AC) power source of variable voltage and frequency, configured to stabilize the rotor induction flux. This three-phase power source that feeds the rotor is the permanent-magnet generator. In this way, resorting to frequency stabilization systems that use electronic converters powered from an electric network external to the electric machine considered is avoided.

In order that the power flux that flows from the electric machine to the electric load is only supplied through the stator windings, it is assumed hereinafter that the operation of the electric machine is always in a sub-synchronous condition (rotor's speed of rotation lower than the desired synchronism). In this way, also transferring energy to the electric load through the windings of the rotor is avoided.

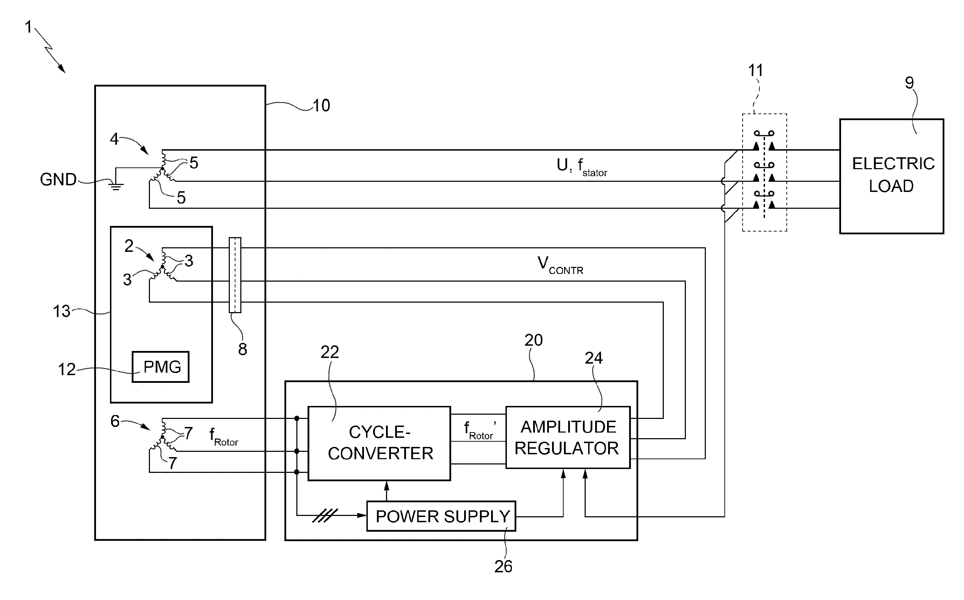

In greater detail, the figure shows a portion of an electric machine, indicated by reference numeral 1. The electric machine 1 comprises a first stator 4 including a stator pack of a ferromagnetic material having a circular crown-like shape with a plurality of slots, and stator windings 5 arranged partially in the slots and electrically connected to each other in a star or delta configuration, as needed; and a rotor 2 including three-phase rotor windings 3 (in other words, the rotor 2 is a wound rotor). The wound rotor 2 has a number of poles equal to the number of poles of the first stator 4.

A transmission unit (or shaft) carries the rotor windings 3 of the wound rotor 2 and is configured to rotate about its axis A under the effect of a rotational force received from outside the electric machine 1. The transmission unit that carries the wound rotor 2 is schematically and qualitatively shown in the figure, where it is indicated by reference numeral 13.

Each stator winding 5 has an electrical terminal to which one phase of the electric machine 1 is associated. In use, the electric machine 1 supplies a three-phase voltage U, with a given frequency and amplitude, from the terminals of the stator windings 5 to an electric load 9, through connection means 11 for the voltage U on the electric load 9. The connection means 11 are provided, for example, by means of a known type of three-phase AC contactor. The three-phase voltage U is the effective voltage at the terminals of the stator windings 5.

A further permanent-magnet rotor 12 is mechanically coupled to the same transmission unit 13 to which the windings of the wound rotor 2 are operatively coupled. Similarly, the permanent-magnet rotor 12 is magnetically coupled to a second stator 6, equipped with its own windings 7, electrically connected to each other according to a star or delta configuration, according to appropriateness (reference is made to a star configuration in the figure).

The permanent-magnet rotor 12 is configured so as to have a sufficient number of poles to generate, in the windings 7 of the second stator 6 and at its minimum rotational speed (e.g. corresponding to the minimum rotational speed of the transmission unit), a voltage with a frequency higher than the maximum frequency that must be provided to the wound rotor 2 to generate the output voltage U at the desired frequency required by the electric load 9. In particular, the permanent-magnet rotor 12 is configured so as to generate, in the second stator windings 6 and at its minimum rotational speed, a voltage with a frequency at least ten times higher than the maximum frequency that must be supplied to the wound rotor 2 to generate the output voltage U at the desired frequency. The applicant has verified that a frequency ten times higher than the maximum frequency that must be supplied to the rotor 2 enables good functionality of the cycle-converter 22 described below.

The second stator 6 is of an annular type; similarly, the permanent-magnet rotor 12 is also an annular rotor and is magnetically coupled to the second stator 6. Likewise, the permanent-magnet rotor 12 is coupled in rotational manner with respect to the second stator 6, for example by means of a bearing unit (not shown), and rotates about an axis (axis A) common to the axis of rotation of the wound rotor 2. Basically, the permanent-magnet rotor 12 and the second stator 6 form a synchronous annular permanent-magnet electric generator. Therefore, during use, the permanent-magnet rotor 12 induces a three-phase alternating voltage (AC) in the second stator windings 6 of frequency and amplitude dependent upon the rotational speed of the permanent-magnet rotor 12. As the number of poles of the permanent-magnet rotor 12 is known, the voltage frequency it induces is representative of the rotational speed of the permanent-magnet rotor 12, in accordance with the operating principle of a synchronous electric machine, as is the permanent-magnet electric machine.

The wound rotor 2 and the permanent-magnet rotor 12 are coaxial with each other, in other words they have respective axes of symmetry coinciding with axis A; therefore, both are operatively coupled to the same transmission unit and are set apart from each other along axis A. In this way, the wound rotor 2 and the permanent-magnet rotor 12 are subjected to the same rotary motion during use.

The wound rotor 2, the permanent-magnet rotor 12, the first stator 4 and the second stator 6, together, form a generator unit 10.

Furthermore, in a manner which is in itself known, the windings 3 of the wound rotor 2 are electrically connected to the fixed part of the electric machine 1 through brushes 8, as foreseen for known types of doubly-fed asynchronous electric machines.

The electric machine 1 further comprises a control unit 20, comprising a cycle-converter 22 and an amplitude regulator 24. The cycle-converter 22, in particular of a three-phase type in itself known, has the function of controlling the frequency value of the output voltage by lowering its value with respect to the inlet voltage frequency, with unchanged amplitude. There are various types of cycle-converters in the known art that can be used for this purpose, which are not described in detail herein for brevity.

The amplitude regulator 24 includes a circuit configured to regulate the amplitude of a signal (in particular, a voltage signal) that it receives as input from the cycle-converter 22, to provide a regulated output signal (in particular, a voltage), i.e. having an amplitude value that is different from the input signal's amplitude value. The regulation is performed in a manner which is in itself known, by means of a closed-loop circuit, taking the output voltage U supplied by the first stator 4 to the electric load 9 and regulating it (minimizing the error) based on a reference voltage in the amplitude regulator 24, predefined according to the amplitude values accepted in input by the electric load 9 that it is wished to power with the output voltage U.

Referring to the figure, the cycle-converter 22 receives the three-phase voltage induced in the second stator windings 6 by the permanent-magnet rotor 12 as input, this having a frequency $f_{Rotor}$ equal to the frequency of the magnetic signal produced by the permanent-magnet rotor 12; the cycle-converter 22 generates a three-phase output voltage signal having a different frequency $f_{Rotor}'$.

The frequency $f_{Rotor}'$ of the signal output from the cycle-converter 22 is determined according to the following relation (sub-synchronous operation of the generator unit 10 is always assumed):

$$f_{Rotor}' = f_{stator} \quad - \frac{n_{Rotor} \times N_{Poles}}{120}$$

where $f_{stator}$ represents the voltage frequency U it is wished to have in output from the generator unit 10. The rotor's speed of rotation $n_{rotor}$ is acquired from the cycle-converter 22 by detection of the voltage frequency on its input, while the ratio $N_{poles}/120$ is fixed and depends on the number of poles of the permanent-magnet synchronous generator, set in the construction phase.

The three-phase voltage output from the cycle-converter 22 is supplied as input to the amplitude regulator 24; the latter carries out amplitude regulation on the voltage signal output from the cycle-converter 22, in turn generating a control signal $V_{CONTR}$ (a voltage, in particular three-phase) which is supplied to the rotor windings 2. The control signal $V_{CONTR}$ supplied from the amplitude regulator 24 to the rotor windings 2 has an amplitude chosen so as to opportunely excite the generator unit 10 and so control the output voltage U. The amplitude regulator 24 is, for example, a thyristor voltage regulator circuit, of a type in itself known. The amplitude regulator 24 is operatively located on a feedback branch (made in a closed loop) such that the output voltage U is taken and fed as input to the amplitude regulator 24, which in turn generates the control signal $V_{CONTR}$ as output, which is fed to the rotor 2. In turn, the wound rotor 2, magnetically coupled to the first stator 4, cooperates in generating the output voltage U, closing the loop.

During regulation of the voltage, the amplitude regulator 24 keeps the amplitude value of the control signal at a constant value, based on an internal reference voltage value $V_{REF}$. In particular, the reference voltage value $V_{REF}$ is equal to the desired amplitude for the output voltage U. In particular, since the voltage U is a three-phase voltage in the example considered, the amplitude regulator 24 calculates an average of the amplitude values of each phase of the voltage U before performing the comparison with the reference $V_{REF}$.

The control signal is therefore a voltage (three-phase in this example) in which all the phases have the same amplitude, given by the amplitude value of the reference $V_{REF}$ minus the average value of the amplitudes of each phase of the output voltage U.

The control signal is therefore indicative of the error existing between the amplitude value of the output voltage U and the desired value for feeding the electric load 9. By supplying the control signal to the wound rotor 2, a rotating magnetic field is generated of amplitude such as to provide the necessary excitation to maintain the output voltage U (voltage at the windings of the stator 4) at the desired value, as the electric load 9 varies.

In other words, when the amplitude of the output voltage exceeds the reference value $V_{REF}$, the amplitude regulator 24 supplies a control signal to the rotor windings 2 having an amplitude such as to reduce the (average) amplitude value of the output voltage U, until the desired (average) amplitude value set by the reference $V_{REF}$ is reached. Conversely, when the (average) amplitude of the output voltage U drops below the reference value $V_{REF}$, the amplitude regulator 24 supplies a control signal to the rotor windings 2 having an (average) amplitude such as to increase the (average) amplitude value of the output voltage U, until the output voltage U reaches the amplitude value set by the reference $V_{REF}$.

The electric power for the internal circuits of the cycle-converter 22 and of the amplitude regulator 24 is advantageously taken from the second stator windings 6 (voltage induced in the second stator windings 6 due to the effect of the permanent-magnet rotor 12) and supplied, by means of a conversion circuit 26, to the cycle-converter 22 and the amplitude regulator 24. The conversion circuit 26 performs conversion of the three-phase alternating voltage (AC), supplied by the second stator windings 6, to a direct voltage (DC) of opportune amplitude for supplying the circuits of the cycle-converter 22 and of the amplitude regulator 24.

The frequency and amplitude regulated voltage, provides as output from the amplitude regulator 24, is transferred to the rotor windings 2 through the brushes 8, so as to use the rotor voltage as a control variable for regulating the active and reactive power generated by the electric machine 1 and fed to the electric load.

In this way, a substantially constant supply voltage U of opportune (predefined) amplitude and frequency is obtained as output from the first stator windings 4 for feeding the electric load.

By using the electric machine 1 in a sub-synchronous condition, the power flux is provided as output only from the side of the first stator 4, thereby performing voltage regulation on the line.

The present invention will now be described by means of an example. It is assumed that the asynchronous generator (wound rotor 2 and first stator 4) rotate, in use, with a speed in the range 9300-12000 rpm, and that it is it wished to generate an output voltage U with a frequency of 400 Hz and at the amplitude required by the electric load 9, for example 200 Vac. The asynchronous generator includes a 4-pole excitation circuit (two pole pairs), while the synchronous generator (permanent-magnet rotor 16 and second stator 6) has 20 poles (ten pole pairs). At the minimum rotational speed (9300 rpm), the natural synchronism is 310 Hz, while the frequency of the electric signal generated by the synchronous generator (the PMG) is 1550 Hz, as can be deduced from the relation:

$$f_{Stator} = \frac{n_{Rotor} \times N_{Poles}}{120} = \frac{9300 \cdot 20}{120} = 1550 \, Hz$$

To obtain an output voltage U with a frequency of 400 Hz, it is therefore necessary to supply the rotor windings 3 with a voltage signal at a frequency of 90 Hz (essentially, the necessary additional frequency value is given by the desired frequency minus the natural synchronism: 400-310=90 Hz). Thus, in this example, the cycle-converter 22 receives the voltage signal at a frequency of 1550 Hz, provided by the synchronous generator through the second stator 6, and performs a frequency reduction from 1550 Hz to 90 Hz.

Instead, if the rotational speed of the asynchronous generator was 11000 rpm, its natural synchronism would produce a voltage signal with a frequency of 366 Hz, while the voltage produced by the synchronous generator (the PMG) would have a frequency of 1833 Hz. Following the previous example, since the voltage frequency required by the electric load 9 is 400 Hz, it is necessary to increment the natural synchronism value by 34 Hz (400-366=34 Hz). Therefore, in this case, the cycle-converter 22 performs a frequency reduction from 1833 Hz to 34 Hz, in order to supply power to the rotor windings 3 in such a way as to obtain a virtual synchronism at the desired frequency of 400 Hz.

Logically, in the case where the rotational speed of the asynchronous generator was 12000 rpm, the output of the cycle-converter 22 would have to produce a voltage with a frequency of 0 Hz (direct current), as the natural synchronism is coincident with the desired frequency (400 Hz). In this case, the output voltage U would be regulated through control of just the amplitude.

With reference to setting the amplitude required by the load, it should be noted that the voltage U output from the first stator 4 is (in a known manner) a function of the machine constant k of the asynchronous generator, of the rotational speed $f_{Rotor}$ of the wound rotor 2 and of the magnetic flux $\Phi$ transferred to the stator 4 due to the effect of rotation of the wound rotor 2 ($U=k \cdot n_{Rotor} \cdot \Phi$). Since the machine constant k is a fixed value, dependent on the construction parameters of the asynchronous generator used, and the speed $f_{Rotor}$ of rotation of the wound rotor 2 is not a parameter that can be acted upon, the control signal $V_{CONTR}$ generated by the control unit 20 has an amplitude value such as to modify the value of magnetic flux $\Phi$ transferred to the stator 4 in such a way that the amplitude of the output voltage U assumes the desired value.

The present invention finds advantageous application in aircraft fitted with turbine engines (e.g. propeller engines), or a generic variable-speed engine.

In this case, the driveshaft to which the wound rotor 2 and permanent-magnet rotor 12 are coupled is coupled to the propeller engine via a shaft, or to the compressor unit of a turbo fan engine, and rotates due to the rotation of the shaft itself.

Due to this rotation, the electric machine 1 generates an output voltage U of the previously described type, the frequency and amplitude values of which are regulated by means of the control unit 20, as described. The output voltage U feeds an electric load 9 that includes, for example, the onboard electronics of the aircraft.

Other advantageous, non-limitative applications of the present invention regard use in aerogenerators.

It is evident from what has been described that the method according to the present invention represents a significant evolution with respect to that reported in the literature and the known state of the art.

In particular, according to the present invention, an alternating current electric generator in provided, in particular a three-phase type with fixed frequency and voltage regulated by means of an electric generator that rotates at a non-stabilized speed and without resorting to stabilization systems for the frequency of the electrical energy produced using electronic converters.

Finally, it is clear that modifications and variants can be made regarding the invention set forth herein without departing from the scope of the present invention, as defined in the appended claims.

For example, what has been described is also applicable to single-phase alternating current electric generators.

**Claims**

1.  An electric machine (1) adapted to be operatively coupled to an electric load (9) which is to be fed by means of an AC electric quantity having a predefined frequency and amplitude, comprising:

    - a doubly-fed asynchronous generator (2, 4) with a wound rotor (2) mechanically coupled to a rotating shaft of said asynchronous generator (2, 4) and configured to generate an AC supply voltage (U), having a first frequency value and a first amplitude value, to be fed to the electric load (9);
    - a permanent-magnet synchronous generator (12, 6), having a permanent-magnet rotor (12) mechanically coupled to said rotating shaft, configured to generate an intermediate AC electric voltage having a second frequency value ($f_{Rotor}$) and a second amplitude value; and
    - a control unit (20), configured to:

      • process said intermediate electric voltage by modifying the second frequency value ($f_{Rotor}$) and the second amplitude value, to generate a control signal ($V_{CONTR}$) having a control frequency value ($f_{Rotor}'$) and a control amplitude value respectively representing a deviation of the second frequency value from the predefined frequency value, and a deviation of the first amplitude value from the predefined amplitude value, and
      • supply the control signal to the wound rotor (2) to set respective frequency and amplitude values of the AC supply voltage (U) so as to generate said AC electric quantity having the predefined frequency and amplitude.

2.  The electric machine according to claim 1, wherein the doubly-fed asynchronous generator (2, 4) also includes brushes 8, said control signal ($V_{CONTR}$ being an electric voltage fed through said brushes (8) by the control unit (20) to windings of the wound rotor (2).

3.  The electric machine according to claim 2, wherein the doubly-fed asynchronous generator (2, 4) further includes a first stator circuit (4), said AC supply voltage (U) being an electric voltage induced magnetically in the first stator circuit (4) due to the combined effect of the rotation of the wound rotor (2) on said rotating shaft and of a control current that flows through the windings of the wound rotor (2) as a function of to the control signal ($V_{CONTR}$).

4.  The electric machine according to any one of the preceding claims, wherein the permanent-magnet synchronous generator further includes a second stator circuit (6) coupled to the control unit (20) to supply said intermediate AC electric voltage.

5.  The electric machine according to any one of the preceding claims, wherein the control unit (20) comprises:

    - a cycle-converter (22) configured to acquire the intermediate AC electric voltage and to vary the second frequency value of the intermediate AC electric voltage to generate a converted voltage output having the control frequency ($f_{Rotor}'$) and the second amplitude value; and
    - an amplitude regulator (24) configured to acquire the converted voltage and to vary the second amplitude value to generate said control signal output ($V_{CONTR}$) having said control frequency ($f_{Rotor}'$) and control amplitude.

6.  The electric machine according to claim 5, wherein the amplitude regulator (24) is configured to acquire the AC supply voltage (U) and to generate said control amplitude so as to minimize the error between the first amplitude value and the predefined amplitude value.

7. The electric machine according to claim 5 or 6, wherein the cycle-converter (22) is configured to generate the control frequency ($f_{Rotor}$') with a value equal to the difference between the predefined frequency value of said AC electric quantity and the second frequency value.

8. A method for feeding an electric load (9) that is to be fed by means of an AC electric quantity having a predefined frequency and amplitude, comprising the step of generating an AC supply voltage (U), having a first frequency value and a first amplitude value, by means of a doubly-fed asynchronous generator (2, 4) including a wound rotor (2) mechanically coupled to a rotating shaft of the asynchronous generator (2, 4), **characterized in that** the method further comprises the steps of:

   - generating an intermediate AC electric voltage, having a second frequency value ($f_{Rotor}$) and a second amplitude value, by means of a permanent-magnet synchronous generator (12, 6) having a permanent-magnet rotor (12) mechanically coupled to said rotating shaft;
   - processing said intermediate electric voltage by modifying the second frequency value ($f_{Rotor}$) and the second amplitude value, generating a control signal ($V_{CONTR}$) having a control frequency value ($f_{Rotor}$') and a control amplitude value representing, respectively, a deviation of the second frequency value from the predefined frequency value, and a deviation of the first amplitude value from the predefined amplitude value; and
   - supplying the control signal to the wound rotor (2) to set respective frequency and amplitude values of the AC supply voltage (U) so as to generate said AC electric quantity having the predefined frequency and amplitude.

9. The method according to claim 8, further comprising the steps of:

   - acquiring the intermediate AC electric voltage by means of a cycle-converter (22);
   - varying the second frequency value of the intermediate AC electric voltage by means of the cycle-converter (22), generating a converted voltage having the control frequency ($f_{Rotor}$') and the second amplitude value;
   - acquiring the converted voltage by means of an amplitude regulator (24); and
   - varying the second amplitude value by means of the amplitude regulator (24), generating said control signal ($V_{CONTR}$) having said control frequency ($f_{Rotor}$') and control amplitude.

10. The method according to claim 9, further comprising the steps of:

    - acquiring the AC supply voltage (U) by means of the amplitude regulator (24); and
    - generating said control amplitude of the control signal ($V_{CONTR}$) by means of the amplitude regulator (24), so as to minimize the error between the first amplitude value and the predefined amplitude value.

11. The method according to claim 9 or 10, further comprising the steps of:

    - generating, by means of the cycle-converter (22), the control frequency ($f_{Rotor}$') having a value equal to the difference between the predefined frequency value of said AC electric quantity and the second frequency value.

12. Use of an electric machine (1) according to any one of claims 1 to 7 as an electric generator for generating an AC electric quantity for feeding an electric load (9).

13. Use according to claim 12, wherein said electric machine is operated in a sub-synchronous operating condition.

Europäisches
Patentamt

European
Patent Office

Office européen
des brevets

# EUROPEAN SEARCH REPORT

Application Number

EP 15 20 3230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/216164 A1 (RIVAS GREGORIO [ES] ET AL) 20 September 2007 (2007-09-20) | 1,8,12 | INV. H02P9/00 |
| Y | * paragraph [0044] - paragraph [0089]; figure 2 * | 2-7, 9-11,13 | |
| A | KHATOUNIAN F ET AL: "Control of a doubly fed induction generator for aircraft application", THE 29TH ANNUAL CONFERENCE OF THE IEEE INDUSTRIAL ELECTRONICS SOCIETY, 2003. IECON '03, IEEE SERVICE CENTER, PISCATAWAY, NJ, vol. 3, 2 November 2003 (2003-11-02), pages 2711-2716, XP010691573, DOI: 10.1109/IECON.2003.1280676 ISBN: 978-0-7803-7906-0 * the whole document * | 2-7, 9-11,13 | |
| Y | GB 868 400 A (JACK & HEINTZ INC) 17 May 1961 (1961-05-17) * page 3, lines 51-54,116-126; figures 1-10 * * page 9, lines 41-44 * | 2-7, 9-11,13 | |

TECHNICAL FIELDS
SEARCHED      (IPC)

H02P

The present search report has been drawn up for all claims

| Place of search | Date of completion of the search | Examiner |
|---|---|---|
| The Hague | 10 June 2016 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 20 3230

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2016

| Patent document cited in search report | Publication date | Patent family member(s) | Publication date |
|---|---|---|---|
| US 2007216164 A1 | 20-09-2007 | AU 2007252928 A1 | 29-11-2007 |
| | | AU 2007257597 A1 | 13-12-2007 |
| | | AU 2007270844 A1 | 10-01-2008 |
| | | CA 2646114 A1 | 13-12-2007 |
| | | CA 2646119 A1 | 29-11-2007 |
| | | CA 2646130 A1 | 10-01-2008 |
| | | DK 1997221 T3 | 25-11-2013 |
| | | EP 1996814 A2 | 03-12-2008 |
| | | EP 1997221 A2 | 03-12-2008 |
| | | EP 2005571 A2 | 24-12-2008 |
| | | ES 2438994 T3 | 21-01-2014 |
| | | JP 5339451 B2 | 13-11-2013 |
| | | JP 5473592 B2 | 16-04-2014 |
| | | JP 2009531011 A | 27-08-2009 |
| | | JP 2009531012 A | 27-08-2009 |
| | | JP 2009533011 A | 10-09-2009 |
| | | US 2007216164 A1 | 20-09-2007 |
| | | US 2009167095 A1 | 02-07-2009 |
| | | US 2009278352 A1 | 12-11-2009 |
| | | US 2011057443 A1 | 10-03-2011 |
| | | US 2013038061 A1 | 14-02-2013 |
| | | WO 2007135566 A2 | 29-11-2007 |
| | | WO 2007135573 A2 | 29-11-2007 |
| | | WO 2007141660 A2 | 13-12-2007 |
| | | WO 2007141669 A2 | 13-12-2007 |
| | | WO 2008004126 A2 | 10-01-2008 |
| GB 868400 A | 17-05-1961 | NONE | |

EPO FORM P0459

For more details about this annex : see Official Journal of the European Patent Office, No. 12/82